# EUROPEAN PATENT SPECIFICATION

(11) **EP 2 625 893 B1**
(45) Date of publication and mention of the grant of the patent: **02.09.2020**
(21) Application number: 11830870.9
(22) Date of filing: 04.10.2011
(51) Int. Cl.: H04W 24/10, H04W 16/18

(54) **APPARATUS AND METHOD FOR CONTROLLING MDT MEASUREMENT REPORT IN 3GPP SYSTEM**
VORRICHTUNG UND VERFAHREN ZUR STEUERUNG VON MDT-MESSBERICHTEN IN EINEM 3GPP-SYSTEM
APPAREIL ET PROCÉDÉ DE COMMANDE DE RAPPORT DE MESURE MDT DANS UN SYSTÈME 3GPP

(30) Priority: 04.10.2010 KR 20100096490
(43) Date of publication of application: 14.08.2013
(73) Proprietor: Samsung Electronics Co., Ltd., Gyeonggi-do 443-742 (KR)
(72) Inventor: KIM, Sang Bum, Seoul 140-220 (KR); KIM, Soeng Hun, Yongin-si Gyeonggi-do 446-908 (KR); JEONG, Kyeong In, Suwon-si Gyeonggi-do 443-372 (KR)
(74) Representative: Grünecker Patent- und Rechtsanwälte PartG mbB
(86) International application number: PCT/KR2011/007301
(87) International publication number: WO 2012/046985

(56) References cited:
- KR-A- 20100 088 085
- KR-A- 20110 139 146
- HTC: "Logged MDT reporting indication in mobility", 3GPP DRAFT; R2-104300 LOGGED MDT REPORTING INDICATION IN MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 17 August 2010 (2010-08-17), XP050451809, [retrieved on 2010-08-17]
- CATT: "Consideration on Priority of MDT Report", 3GPP DRAFT; R2-100074 CONSIDERATION ON PRIORITY OF MDT REPORT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118, 11 January 2010 (2010-01-11), XP050420809, [retrieved on 2010-01-11]
- "3rd Generation Partnership Project;Technical Specification Group TSG RANUniversal Terrestrial Radio Access (UTRA) and Evolved Universal Terrestrial Radio Access (E-UTRA);Radio measurement collection for Minimization of Drive Tests (MDT);Overall description; Stage 2(Release 10)", 3GPP DRAFT; 37320-050, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20100510, 15 May 2010 (2010-05-15), XP050423423, [retrieved on 2010-05-15]
- "3rd Generation Partnership Project; Technical Specification Group Radio Access Network; Evolved Universal Terrestrial Radio Access (E-UTRA); Radio Resource Control (RRC); Protocol specification (Release 9)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.4.0, 28 September 2010 (2010-09-28) , pages 1-252, XP050442306, [retrieved on 2010-09-28]
- "Miscellaneous MDT related stage 3 issues", 3GPP DRAFT; R2-105497 ON MISCELLANEOUS MDT RELATED STAGE 3 ISSUES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi'an; 20101011, 4 October 2010 (2010-10-04), XP050452541, [retrieved on 2010-10-04]
- CATT: 'New SRB for MDT Reporting' 3GPP TSG RAN WG2 MEETING #70, R2-102792, [Online] 10 May 2010 - 14 May 2010, pages 1 - 2, XP050423134 Retrieved from the Internet: <URL:http://www.3gpp.org/ftp/tsg_ran/WG2_RL 2/TSGR2_70/Docs/R2-102792>

## Description

### Technical Field

The present invention relates to a method for controlling a Minimization of Drive Test (MDT) measurement report in a 3rd Generation Partnership Project (3GPP) system. More particularly, the present invention relates to a method for determining a message type for an MDT measurement information report in a connected mode of a User Equipment (UE).

### Background Art

A mobile communication system enables a user to communicate on the move. With rapid technological advancements, the mobile communication system has evolved to a level capable of providing a high speed data communication service as well as a voice communication service. Recently, the 3rd Generation Partnership Project (3GPP), as one of the next generation mobile communication standardization organizations, is progressing in standardization of Long Term Evolution-Advanced (LTE-A).

With the evolvement of the 3GPP standard, discussions are directed towards optimizing the radio network in addition to increasing the data rate. In the initial radio network configuration or optimization stage, a base station or a base station controller should collect radio environment information related to its own cell coverage area.

This process is called a drive test. The drive test of the related art is performed in such a way that an operator carries a test apparatus on a vehicle while repeatedly performing a measurement task for a long period of time. The measurement result is used to configure the system parameters of the base stations or base station controllers. Such a drive test of the related art wastes time and increases total costs of the radio network optimization and maintenance. Studies on minimization of drive tests and enhancement of radio environment analysis process and manual configuration are being conducted in the name of MDT.

In order to accomplish the aforementioned purposes, the UE measures radio channels and reports the radio channel measurement information to the evolved Node B (eNB) periodically or immediately in response to a specific event or after a predefined time has elapsed from the time point when the radio channel measurement information has been recorded, instead of performing the drive test. In the following description, the process for the UE to transmit the radio channel measurement information and other supplementary information to the eNB is called MDT measurement information report. In this case, the UE reports the channel measurement result immediately after the completion of channel measurement in a state where the communication is available with the eNB but defers the report in a state where the communication is not available with the eNB until the connection to the eNB is recovered. The eNB uses the MDT measurement information received from the UE for cell coverage area optimization.

The 3GPP Draft "Logged MDT reporting indication in mobility" by HTC for the 3GPP TSG-RAN WG2 #71, 23 - 27 August 2010, Madrid, Spain teaches logged MDT reporting indication in mobility in LTE wherein the target eNode B can perform a UEInformation procedure to retrieve the MDT logs from a user terminal.

The 3GPP Draft "Consideration on Priority of MDT Report" by CATT for the 3GPP TSG RAN WG2 Meeting #68bis, Valencia, Spain, January 18 - 22, 2010 proposes defining a new SRB with a lower priority than either of the existing SRBs to carry non-real-time MDT reports.

The 3GPP Technical Specification 37.320 V0.5.0 (2010-05) suggests using the UEInformation procedure for the MDT reporting and carrying logged MDT measurements retrieval on SRB2.

The later 3GPP Technical Specification 36.331 V9.4.0 (2010-09) suggests using the Signaling Radio Bearer SRB1 for the UEInformationResponse.

### Disclosure of Invention Technical Problem

Therefore, a need exists for a method for determining a message type for MDT measurement information report in a connected mode of a UE.

### Solution to Problem

Aspects of the present invention are to address at least the above-mentioned problems and/or disadvantages and to provide at least the advantages described below. Accordingly, an aspect of the present invention is to provide a method for determining a message type for a Minimization of Drive Test (MDT) measurement information report in a connected mode of a User Equipment (UE).

In accordance with an aspect of the present invention, an information transmission method of a terminal according to claim 1 is provided.

In accordance with another aspect of the present invention, an information reception method of a base station according to claim 3 is provided.

In accordance with another aspect of the present invention, an information transmission apparatus of a terminal according to claim 4 is provided.

In accordance with still another aspect of the present invention, an information reception apparatus of a base station according to claim 6 is provided. Preferred embodiments are subject of the dependent claims.

Other aspects, advantages, and salient features of the invention will become apparent to those skilled in the art from the following detailed description, which, taken in conjunction with the annexed drawings, discloses exemplary embodiments of the invention.

### Advantageous Effects of Invention

According to the present invention, an exemplary MDT measurement report control method and apparatus is capable of reporting the MDT measurement information through communication between the UE and eNB, resulting in implementation of MDT.

### Brief Description of Drawings

The above and other aspects, features, and advantages of certain exemplary embodiments of the present invention will be more apparent from the following description taken in conjunction with the accompanying drawings, in which:
FIG. 1 is diagram illustrating a Signaling Radio Bearer (SRB) mapping principle in a Long Term Evolution (LTE) system according to an exemplary embodiment of the present invention;
FIG. 2 is a diagram illustrating a principle of collecting and reporting Radio Frequency (RF) fingerprint for use in User Equipment (UE) location prediction according to an exemplary embodiment of the present invention;
FIG. 3 is a diagram illustrating a Minimization of Drive Test (MDT) measurement process of a deferred measurement report procedure according to an exemplary embodiment of the present invention;
FIG. 4 is a diagram illustrating a procedure for reporting recorded channel measurement information in response to a request of an evolved Node B (eNB) according to an exemplary embodiment of the present invention;
FIG. 5 is a diagram illustrating a method for processing a normal Random Access Channel (RACH) and Radio Link Failure (RLF) information and MDT measurement information separately according to an illustrative example;
FIG. 6 is a diagram illustrating a first method for selecting an SRB type according to an exemplary embodiment of the present invention;
FIG. 7 is a diagram illustrating a second method for selecting an SRB type according to an illustrative example;
FIG. 8 is a diagram illustrating a third method for selecting an SRB type according to an illustrative example;
FIG. 9 is a flowchart illustrating a method for informing of an SRB type of a UEInformationResponse message in a UEInformationRequest message according to an illustrative example;
FIG. 10 is a flowchart illustrating a method for an eNB informing a UE of an SRB type of a UElnformationResponse message in a UEInformationRequest message according to an illustrative example;
FIG. 11 is a block diagram illustrating a configuration of a UE according to an exemplary embodiment of the present invention; and
FIG. 12 is a schematic block diagram illustrating a configuration of an eNB according to an exemplary embodiment of the present invention.

Throughout the drawings, it should be noted that like reference numbers are used to depict the same or similar elements, features, and structures.

### Mode for the Invention

The following description with reference to the accompanying drawings is provided to assist in a comprehensive understanding of exemplary embodiments of the invention as defined by the appended claims. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention relate to a method for controlling Minimization of Drive Test (MDT) measurement report in a 3rd Generation Partnership Project (3GPP) system. An Exemplary embodiment of the present invention proposes a method for a User Equipment (UE) to determine a message type for reporting MDT measurement information in connected mode.

In Long Term Evolution-Advanced (LTE-A), the basic MDT measurement information report operations are categorized as shown in Table 1 according to the Radio Resource Control (RRC) state of the UE.

### Table 1

**[Table 1]**

| | |
|---|---|
| RRC state of UE | MDT measurement information report operation of UE |
| Idle mode | Logging and deferred reporting |
| Connected mode | Immediate reporting |

In Table 1, the state in which the UE does not communicate with the evolved Node B (eNB) is referred to as the idle mode, and the state in which the UE is communicating with the eNB is referred to as connected mode. In an MDT, the channel measurement information is transmitted through RRC signaling such that, if the UE is in an idle mode, it is impossible to transition from the idle mode to the connected mode for the transmission of the channel measurement information. In this case, the UE records the channel measurement information and defers the transmission until the UE transitions to the connected mode.

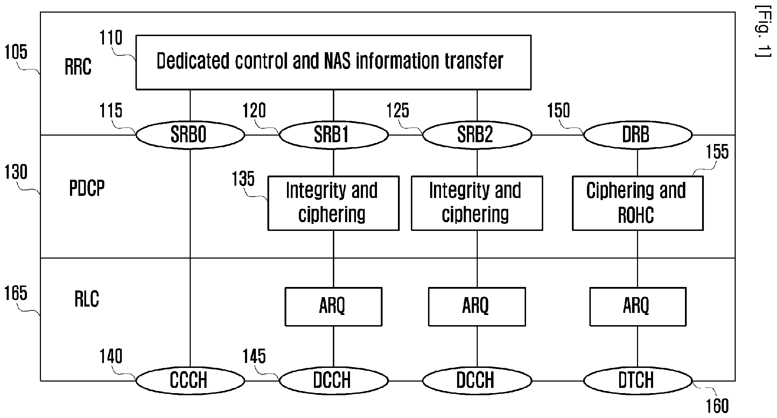

FIGs. 1 through 12, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly stated otherwise. A set is defined as a non-empty set including at least one element.

FIG. 1 is diagram illustrating a Signaling Radio Bearer (SRB) mapping principle in an LTE system according to an exemplary embodiment of the present invention.

Referring to FIG. 1, MDT measurement information recorded by the UE is transferred from the RRC layer to the Packet Data Convergence Protocol (PDCP) layer through an SRB in the control plane. The RRC control or Network Access Server (NAS) message 110 transferred from the RRC layer 105 to the Packet Data Channel (PDCH) layer 130 is delivered through an SRBO 115, an SRB1 120, or an SRB2 125. The SRBO 115 is used for delivering the RRC message to be transmitted through a Common Control Channel (CCCH) 140 and has the highest priority. The SRB1 is used for delivering the RRC message to be transmitted through a Dedicated Control Channel (DCCH) 145. The SRB2 is used for delivering the NAS message to be transmitted through the DCCH. All the packets delivered through the SRB 1 and the SRB2 are encoded in the integrity and ciphering process 135. The SRB1 has a priority higher than that of the SRB2. In addition to the SRBO to SRB2, there is a Data Radio Bearer (DRB) 150 used for transmitting user plane data. The packet to be transmitted in the DRB 150 is delivered to the Radio Link Control (RLC) layer 165 through ciphering and a Robust Header Compression (ROHC) process 155 and mapped to a Dedicated Traffic Channel (DTCH) 160 in the RLC layer 165.

The UE in idle mode records the MDT measurement information periodically. The downlink pilot signal measurement is performed in such a way that the UE measures and collects the information necessary for optimization of a service area repeatedly at a predefined cycle in a connected mode or an idle mode. The measurement period value is referred to as MDT measurement period and provided to the UE through the MDT configuration of an eNB. The MDT measurement information recorded for optimization of service area is as follows:
1. Global cell ID information of the serving cell
2. Signal strength (i.e., Reference Signal Received Power (RSRP)) and signal quality (i.e., Reference Signal Received Quality (RSRQ)) measurement information of the serving cell
3. Physical Cell ID (PCID), Carrier frequency ID, Remote Access Terminal (RAT) type information, signal strength (i.e., RSRP) and signal quality (i.e., RSRQ) measurement information of intra-freq/inter-freq/inter-RAT neighbor cells
4. Location information
5. Time information

The MDT measurement information includes the global cell ID information of the serving cell. The global cell ID information informs of the cell from which the information is connected. The global cell ID must be unique to identify the cell. The radio channel state of the serving cell can be expressed by a specific measurement. The radio channel state corresponds to RSRP and RSRQ in Evolved Universal Terrestrial Radio Access (EUTRA), Received Signal Code Power (RSCP) and Ec/No in Universal Terrestrial Radio Access Network (UTRAN), and Rxlev in Global System for Mobile communications (GSM)/Enhanced Datarate for GSM Evolution (EDGE) Radio Access Network (GERAN). Although the description is directed to the EUTRA LTE system, exemplary embodiments of the present invention can be applied to other systems. The MDT function is expected to be adopted in 3GPP LTE and UMTS.

For the intra-freq/inter-freq/inter-Remote Access Tool (RAT) neighbor cells, the PCID and signal strength (i.e., RSRP) and signal quality (i.e., RSRQ) measurement information, and particularly for the inter-freq/inter-RAT neighbor cells, the carrier freq ID and RAT type information are included.

In the MDT measurement information transmitted to the eNB, the location information is important. In case that it is impossible to acquire the Global Positioning System (GPS)-based location information, the UE sends the serving eNB a set of the signal strengths received from neighbor eNBs which is referred to as a Radio Frequency (RF) fingerprint. The eNB which has received the RF fingerprint knows the locations of the neighbor eNBs and can predict the distance between the neighbor cells and the UE by applying the signal strengths of the neighbor cells to the signal path attenuation model. By performing triangulation with the location information of neighbor eNBs and distance between neighbor cell and UE, it is possible to approximately locate the UE.

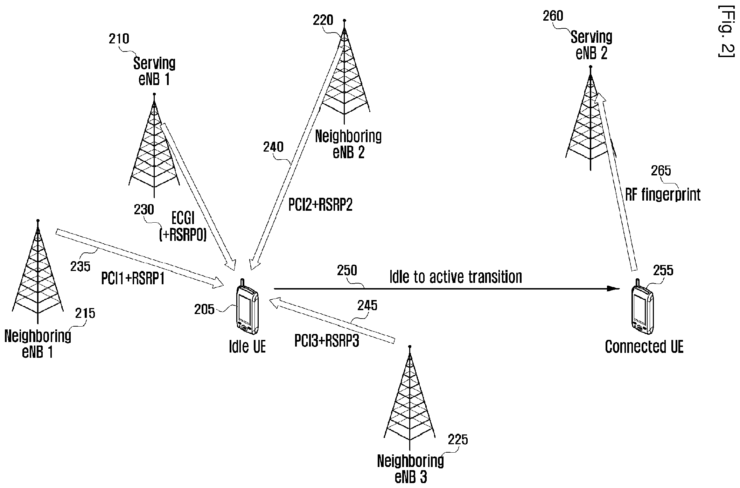

FIG. 2 is a diagram illustrating a principle of collecting and reporting an RF fingerprint for use in UE location prediction according to an exemplary embodiment of the present invention. In a case that it is impossible to acquire the GPS-based location information, the UE can send the eNB with the RF fingerprint in spite of its accurate location information. The eNB can predict the location of the UE using the RF fingerprint. In the following description, the terms "RF fingerprint" and "prediction information" are used interchangeably with each other.

Referring to FIG. 2, a UE 205 which is performing MDT measurement in an idle mode collects and records the RF fingerprints from the neighbor eNBs 215, 220, and 225 and, when the UE 205 transitions to the connected mode, sends the recorded RF fingerprint to the serving eNB 2 260. The RF fingerprint can be connected by the UE 205 in a connected mode as well as an idle mode, and the UE 205 in a connected mode can immediately transmit the RF fingerprint to the eNB 2 260.

It is assumed that the UE 205 in the idle mode is camped on the serving cell. The UE 205 receives the serving E-UTRAN Cell Global Identifier (ECGI) from the serving eNB 1 210 as denoted by reference number 230. The ECGI is the unique identifier of the corresponding cell. The UE 205 can collect the RSRP of the serving eNB 1 210. The UE 205 also collects the Physical Cell Identities (PCIs) and RSRPs of the neighbor eNBs 215, 220, and 225 as denoted by reference numbers 235, 240, and 245. The PCI is the identifier of the corresponding eNB as the ECGI. When the ECGI has a unique value per eNB, PCI can be reused such that multiple eNBs can have the same PCI. Since the ECGI is unique for each eNB, it is relatively large in size, which causes a burden to use the ECGI value in every communication configuration process in view of resource efficiency. Accordingly, the ECGI is used only in the initial communication setup process and the eNBs are discriminated from each other using PCI, which is relatively small in size, in the afterward communication setup process. The PCI is relatively small in size for discriminating among all the eNBs and thus reused such that it is necessary to assign the same PCI to the eNBs located far enough from each other. The UE 205 accurately determines the service area of the serving eNB 1 210 using ECGI information and discovers the neighbor eNBs 215, 220, and 225 with the PCIs collected in the corresponding area.

In step 250, the RF fingerprints collected as denoted by reference number 230, 235, 240, and 245 are transmitted to a new serving eNB 2 260 at the time when the UE 205 in the idle mode transitions to a connected mode. The old serving eNB 1 210 and the new serving eNB 2 260 can be identical with each other. If the two serving eNBs are different from each other, this means that the UE 205 moves from the service area of the serving eNB 1 210 to the service area of another serving eNB 2 260. The UE 205 in the connected mode can transmit the RF fingerprint 265 along with the recorded MDT measurement information in response to the request from the serving eNB 2 260. For reference, the RF fingerprint can include up to 6 eNBs in the current LTE standard.

The time information is an important factor of the MDT measurement information. The time information takes an important role to optimize the service area in a radio channel measurement. This is because the radio channel state varies as time progresses. The time information is more important in deferred report for the UE in an idle mode than in an immediate report for the UE in a connected mode. Since, in the connected mode, the measurement report is transmitted immediately right after the measurement, the time information is not that important. In the deferred transmission of the recorded measurement report, if no time information is included, it is impossible to know when the information is collected. In the 3GPP standard under development, the time information is included mandatorily for the deferred measurement report but not for the immediate measurement report.

The time information can be provided in various forms. The UE can provide the absolute time or relative time information. The absolute time requires a relatively large number of bits. In contrast, the absolute time can be expressed with a relatively small number of bits as compared to the absolute time. In order to reduce the signaling overhead, the relative time information is included in the MDT measurement information in the 3GPP standard. The eNB provides the UE with the absolute reference time information, and the UE inserts the relative time stamp in each measurement sample with reference to the absolute time. Once the MDT measurement has completed, the UE notifies the eNB of the absolute reference time information previously provided by the eNB. This is because the eNB that provided the absolute reference time information may differ from the current eNB receiving the measurement report.

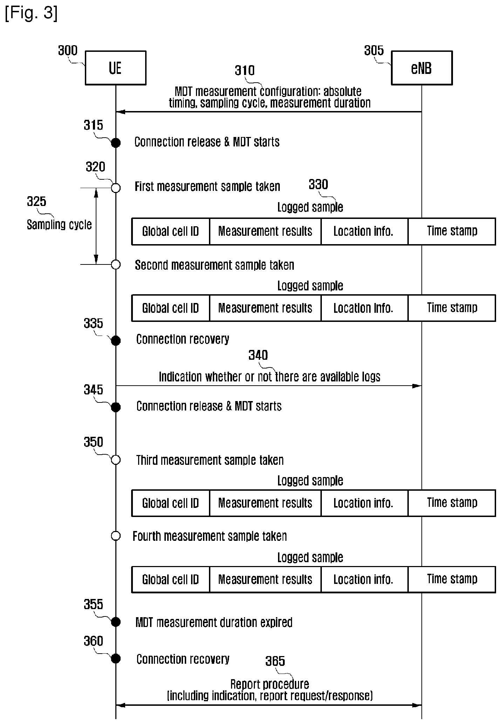

FIG. 3 is a diagram illustrating an MDT measurement process of a deferred measurement report procedure according to an exemplary embodiment of the present invention.

Referring to FIG. 3, an eNB 305 sends a UE 300 in the connected mode the information necessary for MDT configuration (i.e., MDT configuration information) at step 310. The MDT configuration information includes the absolute reference time information, sampling cycle, and measurement duration. The absolute reference time has been described above. The sampling cycle is used for measuring the periodic downlink pilot signal, and the MDT measurement information is collected and recorded at a predefined cycle. The measurement duration is the total time for performing MDT. Once the measurement duration has elapsed, the UE 300 stops MDT measurement. The RRC state of the UE 300 transitions from the connected mode to the idle mode and the UE 300 starts MDT measurement at step 315. After the completion of the first MDT measurement and recoding at step 320, the UE 300 continues performing MDT measurement and recording at the predefined sampling cycle at step 325. At this time, the UE records the MDT measurement information described above for every measured sample at step 330. The RRC state transitions from the idle mode to the connected mode at step 335 and the UE 300 notifies the eNB of whether there is the recorded MDT measurement information (i.e., available logs) at step 340. The eNB can request for the report according to the situation. If there is a request for the report from the eNB, the UE reports the MDT measurement information recorded until then and deletes all the reported information. In contrast, if there is no request for the report, the UE continues recording the MDT measurement information.

If the UE 300 enters the idle mode at step 345 and the measurement duration has not yet elapsed, the UE 300 continues MDT operation to collect the MDT measurement information at step 350. The measurement duration can be considered for the time in connected mode. If the measurement duration expires at step 355, the UE 300 stops the MDT measurement. If the UE 300 transitions to the connected mode at step 360, the UE 300 notifies the eNB of the recorded MDT measurement information and performs a reporting procedure in response to the request from the eNB at step 365.

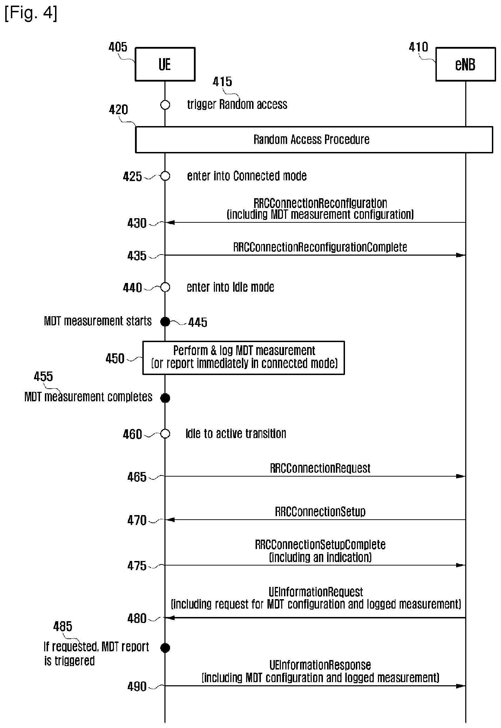

FIG. 4 is a diagram illustrating a procedure for reporting recorded channel measurement information in response to a request of an eNB according to an exemplary embodiment of the present invention.

Referring to FIG. 4, a UE 405 triggers a random access process at step 415 and attempts a random access to the network at step 420. Thereafter, the UE 405 enters the connected mode at step 425. The eNB 410 sends the UE 405 the information necessary for MDT, i.e., the channel measurement configuration information, through the RRC connection reconfiguration (RRCConnectionReconfiguration) message at step 430. The UE 405 sends the eNB 410 an RRC connection reconfiguration complete (RRCConnectionReconfigurationComplete) message in response to the RRCConnectionReconfiguration message at step 435.

Afterward, the UE 405 transitions to the idle mode at step 440 and performs MDT measurement with the start of the MDT measurement duration at step 445. At step 450, the UE 405 performs and logs MDT measurement or immediately reports to the eNB 410 in the connected mode. At step 455, the UE 405 completes the MDT measurement. Thereafter, the UE 405 determines transition to the connected mode at step 460 and sends the eNB 410 an RRC Connection Request (RRCConnectionRequest) message at step 465. If it is determined to allow the RRC connection, the eNB 410 sends the UE 405 an RRC Connection Setup (RRCConnectionSetup) message at step 470. After transition to the connected mode, the UE 405 notifies the eNB 410 of the existence of the channel measurement information recorded in the idle mode at step 475. For this purpose, an identifier is transmitted in RRC Connection Setup Complete (RRCConnectionSetupComplete) message. The identifier is transmitted to notify the eNB 410 of where the UE 405 has the recorded MDT measurement information to be reported such that the eNB 410 can determine whether to request for the MDT measurement information. Typically, if the UE 405 stays in the idle mode for a relatively long period of time, a large amount of channel measurement information is accumulated. If the UE transitions to the connected mode in such a state, the UE 405 has to consume a large amount of resources for the transmission of the recorded information. The eNB 410 determines whether to request for the MDT measurement information in consideration of a current radio capacity status.

If it is determined that the channel measurement information recorded by the UE 405 is useful, the eNB 410 requests the UE 405 to report the MDT measurement information by transmitting a UE Information Request (UEInformationRequest) message at step 480. Upon receipt of the UE Information Request message, the UE 405 sends the eNB 410 the MDT measurement information at step 485. Typically, the transmission of the recorded MDT measurement information is not urgent, and the MDT measurement information transmission can be attempted in consideration of the priorities of other RRC messages and normal data. The UE 405 transmits MDT measurement information to the eNB 410 in a UE Information Response (UEInformationResponse) message at step 490. The UE 405 can delete the MDT measurement information which is already reported to the eNB 410.

The UE Information reporting procedure for requesting and reporting the UE information is of requesting and reporting Random Access Channel (RACH) and Radio Link Failure (RLF) information. The RACH and RLF information can be requested and reported in a UE information process simultaneously. Accordingly, the MDT measurement information can also be requested and reported along with the RACH and RLF information of the related art. The RACH and RLF information belongs to the SRB1, and the MDT measurement information can be transmitted through the SRB2 having a lower priority than that of the SRB1. In the situation where different SRB types coexist, there is a need of a method for controlling the eNB's simultaneous requests for RACH, RLF, and MDT measurement information.

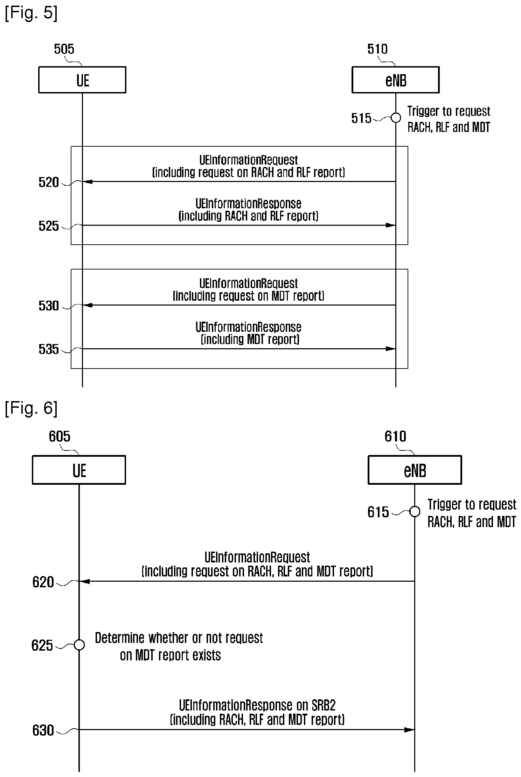

FIG. 5 is a diagram illustrating a method for processing a normal RACH and RLF information and MDT measurement information separately according to an exemplary embodiment of the present invention.

Referring to FIG. 5, an eNB 510 can request for the RACH, RLF, and MDT measurement information simultaneously, if necessary, but actually requests to a UE 505 for the UE information in separate processes at step 515. The eNB 510 requests for the RACH and RLF information using a UEInformationRequest message at step 520. In response to the UEInformationRequest message, the UE 505 reports the corresponding information with UEInformationResponse message at step 525. Here, the UEInformationRequest and UEInformationResponse messages are formed for the SRB1. The eNB 510 requests the MDT measurement information with another UEInformationRequest message at step 530. The UE 505 reports the requested information using UEInformationResponse message at step 535.

Here, the UEInformationRequest and UEInformationResponse messages are formatted for the SRB type determined for the predefined MDT measurement information. Assuming that the MDT measurement information is transferred through the SRB2, the corresponding messages are automatically formatted for the SRB2. By preventing the RACH, RLF, and MDT measurement information from being processed in a UE Information process, it is possible to avoid the application of a new SRB type selection method. However, this method is disadvantageous in that the UE Information process should be performed repeatedly.

In order to address this issue, there is a need of a method for selecting an SRB type in a situation where all the types of information are requested and reported. There are three approaches to achieve this purpose.

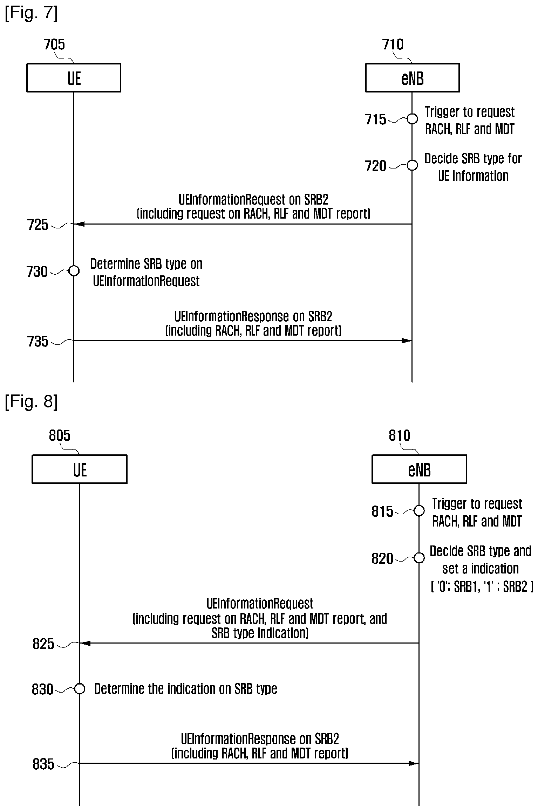

FIG. 6 is a diagram illustrating a first method for selecting an SRB type according to an exemplary embodiment of the present invention, FIG. 7 is a diagram illustrating a second method for selecting an SRB type according to an exemplary embodiment of the present invention, and FIG. 8 is a diagram illustrating a third method for selecting an SRB type according to an exemplary embodiment of the present invention.

Referring to FIG. 6, the first method is to determine the SRB type according to whether the MDT measurement information includes the UEInformationRequest message. An eNB 610 may send a request for the RACH, RLF, and MDT measurement information simultaneously at step 615. The eNB 610 requests the UE 605 for the RACH, RLF, and MDT measurement information using the UEInformationRequest message at step 620. The UE 605 determines whether the UEInformationRequest message includes the MDT measurement information request at step 625. If the UEInformationRequest message includes the MDT measurement information request, the UE 605 reports all the types of information to the eNB 610 using the UEInformationResponse message for the predefined SRB type at step 630. For example, if the MDT measurement information request is included, it can be defined that the UEInformationResponse message is formatted for the SRB2. In this case, the RACH and RLF information are transferred through the SRB2. If no MDT measurement information is included, the RACH and RLF information is transferred through the SRB1.

Referring to FIG. 7, the second method is to determine the SRB type of the UEInformationResponse message according to the SRB type of the UEInformationRequest message. An eNB 710 may send a request for the RACH, RLF, and MDT measurement information simultaneously at step 715. The eNB 710 determines the SRB type to be used in UE Information at step 720. The eNB transmits the request for the RACH, RLF, and MDT measurement information to the UE 705 using an appropriate UEInformationRequest message at step 725. The UE 705 determines the SRB type of the UEInformationRequest message at step 730. The UE 705 reports the RACH, RLF, and MDT measurement information to the eNB 710 using the UEInformationResponse message to which the corresponding SRB type is applied at step 735. For example, if the SRB type of the UEInformationRequest message is set to SRB2, the UE 705 transmits the UEInformationResponse message set to the SRB2. This method is advantageous to determine the type of the UEInformationResponse message without additional indication. However, this method also has a disadvantage in that the transmission of UEInformationRequest message is influenced by the priority of the SRB type.

Referring to FIG. 8, the third method is to transmit the UEInformationRequest message having the information indicating the SRB type of the UEInformationResponse message. An eNB 810 can request for the RACH, RLF, and MDT measurement information simultaneously at step 815. The eNB 810 determines the SRB type of the UEInformationResponse message which the eNB 810 wants to receive at step 820. Assuming the UEInformationRequest message includes a 1-bit indicator, the value 0 of the indicator indicates application of the SRB1 to the UEInformationResponse message, and the value 1 indicates application of the SRB2. The eNB 810 sends the UE 805 the UEInformationRequest message including the indicator at step 825. The UE 805 determines the SRB type to be applied to the UEInformationResponse message based on the indicator included in the UEInformationRequest message at step 830. The UE 805 sends the eNB 810 the UEInformationResponse message including the RACH, RLF, and MDT measurement information according to the SRB type at step 835. The indicator is included in the UEInformationRequest message along with the MDT measurement information request. However, if no MDT measurement information request is included, the UE Information process is performed normally with the SRB 1 to process the RACH and RLF information.

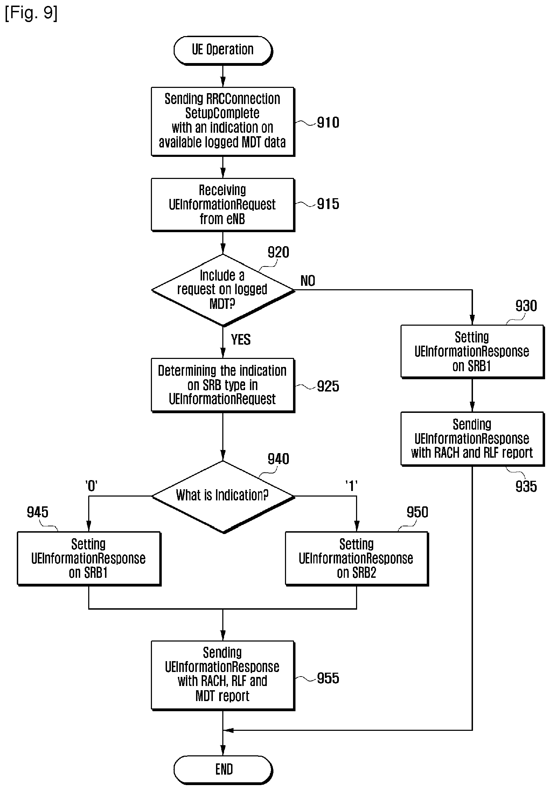

The UE performs the MDT measurement report procedure as follows. In an idle mode, the UE collects and records the MDT measurement information during the MDT measurement time duration. In a connected mode, the UE can notify the eNB of whether there is the MDT measurement information to be reported. If the eNB requests for the MDT measurement information in response to the notification, the UE can report the MDT measurement information to the eNB. The UE can determine the SRB for the MDT measurement information and transmit the MDT measurement information to the eNB through the SRB. Here, the UE can determine the SRB for the MDT measurement information according to the SRB with which the MDT measurement information is requested or the SRB indicator received in the MDT measurement information request. In the connected mode, the UE collects and reports other MDT measurement information to the eNB. The MDT measurement report procedure of the UE is described hereinafter with reference to FIG. 9.

FIG. 9 is a flowchart illustrating a method for informing of an SRB type of a UEInformationResponse message in a UEInformationRequest message according to an exemplary embodiment of the present invention.

Referring to FIG. 9, a UE in a connected mode notifies an eNB of whether MDT measurement information is to be reported by transmitting an RRCConnectionSetupComplete message at step 910. The UE then receives a UEInformationRequest message from the eNB at step 915. The UE determines whether the UEInformationRequest message includes the MDT measurement information report request at step 920.

If it is determined at step 920 that an MDT measurement information report request is included, the UE determines the SRB type indicator included in the UEInformationRequest message at step 925. The SRB type indicator indicates the SRB type of the UEInformationResponse. The UE determines the information indicated by 1-bit indicator at step 940. If the indicator is set to 0, the UE sets the UEInformationResponse message on SRB1 at step 945. If the indicator is set to 1, the UE sets the UEInformationResponse message on SRB2 at step 950. Thereafter, the UE reports the MDT measurement information with the UEInformationResponse message at step 955.

In contrast, if it is determined at step 920 that no MDT measurement information report request is included, the UE sets information response on SRB1 at step 930 and sends the information response with RACH and RLF report at step 935.

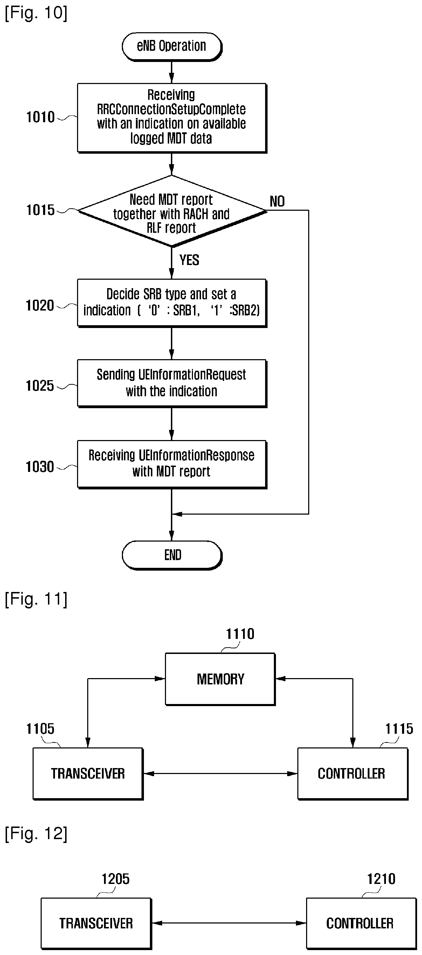

The eNB performs a procedure for controlling the MDT measurement report of the UE as follows. The eNB requests the UE for the MDT measurement information collected and recorded for the MDT measurement time duration. Upon receipt of notification on whether the MDT measurement information to be reported exists, the eNB can request the UE for the MDT measurement information in response to the notification. Thereafter, the eNB can determine the SRB for the MDT measurement report and notify the UE of the determined SRB. Here, the eNB can request for the MDT measurement information through the corresponding SRB or with the SRB indicator. The eNB receives the MDT measurement information transmitted by the UE. An exemplary MDT measurement report control procedure is described with reference to FIG. 10.

FIG. 10 is a flowchart illustrating a method for an eNB informing a UE of an SRB type of a UEInformationResponse message in a UEInformationRequest message according to an exemplary embodiment of the present invention.

Referring to FIG. 10, an eNB receives the RRCConnectionSetupComplete message from the UE at step 1010. The RRCConnectionSetupComplete message can include the indicator informing of the MDT measurement information to be reported. The eNB determines if it is necessary to request for the MDT measurement information along with the RACH and RLF information at step 1015. If it is necessary, the eNB determines the SRB type of the UEInformationResponse message and sets the SRB type indicator at step 1020. Thereafter, the eNB transmits the UEInformationRequest message including the SRB type indicator at step 1025. The eNB receives the UEInformationResponse message of the corresponding type at step 1030. The UEInformationResponse message includes the MDT measurement information requested by the eNB.

In an exemplary embodiment of the present invention, various methods for controlling the SRB type in the UE Information process are proposed. Since the operations of the UE and eNB in the respective methods are similar to those described above, the description is made of a representative method.

FIG. 11 is a block diagram illustrating a configuration of a UE according to an exemplary embodiment of the present invention.

Referring to FIG. 11, a UE includes a transceiver 1105, a memory 1110, and a controller 1115. The transceiver 1105 is responsible for radio communication of the UE. The transceiver 1105 establishes a radio connection with the eNB. The transceiver 1105 transmits and receives signals to and from the serving eNB and receives the signals from the neighbor eNBs.

The memory 1110 includes program and data memories. The program memory stores the programs for controlling general operations of the UE. The program memory stores the program for MDT measurement report. The data memory stores data generated as a result of the running of the programs.

The controller 1115 controls overall operations of the UE. The controller 1115 collects the MDT measurement information and stores the collected MDT measurement information in the memory 1110. For this purpose, the controller 1115 includes a collector. The collector collects and records the MDT measurement information for the MDT measurement duration when the UE is in the idle mode. The collector also collects and records the MDT measurement information in the connected mode.

The controller 1115 controls the transceiver 1105 to transmit the MDT measurement information to the eNB. If the UE transitions to the connected mode, the controller 1115 controls such that the MDT measurement information recorded in the idle mode is transmitted to the eNB. In the connected mode, the controller 1115 controls such that the MDT measurement information is transmitted to the eNB immediately after being collected. At this time, the controller 115 can notify the eNB if there is the MDT measurement information to be reported. If the eNB requests for the MDT measurement information in response to the notification, the controller 1115 can transmit the MDT measurement information to the eNB. The controller 1115 determines the SRB for the MDT measurement information and transmits the MDT measurement information on the SRB. Here, the controller 1115 determines the SRB depending on whether the UEInformationRequest message received from the eNB includes the MDT measurement information request. That is, if the UEInformationRequest message includes no MDT measurement information request, the controller 1115 sets the UEInformationResponse message on the SRB1. In contrast, if the UEInformationRequest message includes the MDT measurement information request, the controller 1115 sets the UEInformationResponse message on the SRB2 and transmits the UE information including the MDT measurement information. The controller 1115 can also select the SRB on which the MDT measurement information request is received or the SRB indicated by the SRB indicator received in the MDT measurement information request to transmit the MDT measurement information.

For this purpose, the controller 1115 controls the transceiver 1105 to transmit and receive the RRC messages related to the MDT operation. The controller 1115 then configures the RRC message necessary and controls the transceiver 1105 to transmit the corresponding message. Here, the controller 1115 can control the transceiver 1105 to transmit the RRCConnectionSetupComplete message including the MDT measurement information indicator or the UEInformationResponse message including the MDT measurement information provided by the memory 1110. The controller 1115 also analyzes the UEInformationRequest message transmitted by the eNB. Depending on the method, the controller 1115 determines whether the UEInformationRequest message includes the MDT measurement information request and the SRB type indicator or determines the SRB type of the UEInformationRequest message.

FIG. 12 is a schematic block diagram illustrating a configuration of an eNB according to an exemplary embodiment of the present invention.

Referring to FIG. 12, an eNB includes a transceiver 1205 and a controller 1210.

The transceiver 1205 is responsible for the radio communication function of the eNB. The transceiver 1205 can establish radio connection with the UEs in the corresponding cell.

The controller 1210 controls overall operations of the eNB. The controller 1210 configures the necessary RRC message and controls the transceiver 1205 to transmit the message. That is, the controller 1210 controls the transceiver 1205 to transmit the signal for MDT measurement information request. If the notification on whether the UE has the MDT measurement information to report, the controller 1210 can request the UE to transmit the MDT measurement information in response to the notification. The controller 1210 can also notify the UE of the SRB determined for MDT measurement information transmission. Here, the controller 1210 can request the MDT measurement information through the corresponding SRB or with the indicator indicating the corresponding SRB. Depending on the method, the UEInformationRequest message includes the MDT measurement information request and the SRB type indicator. The controller 1210 can also determine the SRB type of the UEInformationRequest message. In this manner, the controller 1210 receives the MDT measurement information from the UE. That is, if the UEInformationRequest message includes no MDT measurement information request, the controller 1210 receives the UEInformationResponse message through the SRB1. In contrast, if the UEInformationRequest message includes the MDT measurement information request, the controller 1210 receives the UEInformationResponse including the MDT measurement information through the SRB2.

Through the UE Information process, the UE transmits the MDT measurement information to the eNB. The UE deletes the reported MDT measurement information from the memory. The eNB can request the UE for the MDT measurement information in the middle of the MDT measurement duration.

As described above, an exemplary MDT measurement report control method and apparatus of the present invention is capable of reporting the MDT measurement information through communication between the UE and eNB, resulting in implementation of MDT.

While the invention has been shown and described with reference to certain exemplary embodiments thereof, it will be understood by those skilled in the art that various changes in form and details may be made therein without departing from the scope of the invention as defined by the appended claims.

## Claims

1. An information transmission method by a terminal (300), the method comprising:
receiving (430), from a base station (305), minimization of drive test, MDT, configuration information in radio resource control, RRC, connected mode, the MDT configuration information including duration information related to the MDT;
transmitting (475), to the base station (305), MDT available information via a radio resource control, RRC, connection setup complete message, if the terminal (300) has an available MDT measurement information generated based on the MDT configuration information, the MDT available information indicating that the terminal (300) has the available MDT measurement information the method being **characterized by** further comprising:
receiving (620), from the base station (305), a request message comprising a request for radio link failure, RLF, information and random access channel, RACH, information; and
transmitting (630), to the base station (305), a response message including the RLF information and the RACH information according to the request message,
wherein the response message is transmitted via a signaling radio bearer 2, SRB2, if the request message includes a request for the MDT measurement information and the MDT measurement information is presented in the response message, and
wherein the response message is transmitted via a signaling radio bearer 1, SRB1, if the request message does not include the request for the MDT measurement information and the MDT measurement information is not presented in the response message.

2. The method of claim 1, further comprising:
deleting the MDT measurement information after transmitting the MDT measurement information to the base station (305).

3. An information reception method by a base station (305), the method comprising:
transmitting (430), to a terminal (300), minimization of drive test, MDT, configuration information in radio resource control, RRC, connected mode, the MDT configuration information including duration information related to the MDT;
receiving (475), from the terminal (300), MDT available information via a radio resource control, RRC, connection setup complete message, if the terminal (300) has an available MDT measurement information generated based on the MDT configuration information, the MDT available information indicating that the terminal (300) has the available MDT measurement information; the method being **characterized by** further comprising:
transmitting (620), to the terminal (300), a request message comprising a request for radio link failure, RLF, information and random access channel, RACH, information; and
receiving (630), from the terminal (300), a response message including the RLF information and the RACH information according to the request message,
wherein the response message is received via a signaling radio bearer 2, SRB2, if the request message includes a request for the MDT measurement information and the MDT measurement information is presented in the response message, and
wherein the response message is received via a signaling radio bearer 1, SRB1, if the request message does not include the request for the MDT measurement information and the MDT measurement information is not presented in the response message.

4. An information transmission apparatus of a terminal (300), the apparatus comprising:
a transceiver (1105) for transmitting and receiving a signal; and
a controller (1115) configured to:
receive (430), from a base station (305), minimization of drive test, MDT, configuration information in radio resource control, RRC, connected mode, the MDT configuration information including duration information related to the MDT,
transmit (475), to the base station (305), MDT available information via a radio resource control, RRC, connection setup complete message, if the terminal (300) has an available MDT measurement information generated based on the MDT configuration information, the MDT available information indicating that the terminal (300) has the available MDT measurement information, the apparatus being **characterized by** the controller being further configured to:
receive (620), from the base station (305), a request message comprising a request for radio link failure, RLF, information and random access channel, RACH, information, and
transmit (630), to the base station (305), a response message including the RLF information and the RACH information according to the request message,
wherein the response message is transmitted via a signaling radio bearer 2, SRB2, if the request message includes a request for the MDT measurement information and the MDT measurement information is presented in the response message, and
wherein the response message is transmitted via a signaling radio bearer 1, SRB1, if the request message does not include the request for the MDT measurement information and the MDT measurement information is not presented in the response message.

5. The apparatus of claim 4, wherein the controller (1115) is further configured to delete the MDT measurement information after transmitting the MDT measurement information to the base station (305).

6. An information reception apparatus of a base station (305), the apparatus comprising:
a transceiver (1205) for transmitting and receiving a signal; and
a controller (1210) configured to:
transmit (430), to a terminal (300), minimization of drive test, MDT, configuration information in radio resource control, RRC, connected mode, the MDT configuration information including duration information related to the MDT,
receive (475), from the terminal (300), MDT available information via a radio resource control, RRC, connection setup complete message, if the terminal (300) has an available MDT measurement information generated based on the MDT configuration information, the MDT available information indicating that the terminal (300) has the available MDT measurement information, the apparatus being **characterized by** the controller being further configured to:
transmit (620), to the terminal (300), a request message comprising a request for radio link failure, RLF, information and random access channel, RACH, information, and
receive (630), from the terminal (300), a response message including the RLF information and the RACH information according to the request message,
wherein the response message is received via a signaling radio bearer 2, SRB2, if the request message includes a request for the MDT measurement information and the MDT measurement information is presented in the response message, and
wherein the response message is received via a signaling radio bearer 1, SRB1, if the request message does not include the request for the MDT measurement information and the MDT measurement information is not presented in the response message.

## Patentansprüche

1. Informationsübertragungsverfahren durch ein Endgerät (300), wobei das Verfahren umfasst:
Empfangen (430), von einer Basisstation (305) von MDT- (Minimization of Drive Test - Minimierung des Fahrttests) Konfigurationsinformationen in einem verbundenen Modus einer Funkressourcensteuerung (Radio Resource Control, RRC), wobei die MDT-Konfigurationsinformationen Dauerinformationen in Bezug auf die MDT enthalten;
Senden (475), an die Basisstation (305), von verfügbaren MDT-Informationen über eine Funkressourcensteuerungs-, RRC-, Verbindungsaufbauvollständigkeitsnachricht, wenn das Endgerät (300) eine verfügbare MDT-Messinformation hat, die basierend auf den MDT-Konfigurationsinformationen erzeugt wurde, wobei die verfügbaren MDT-Informationen anzeigen, dass das Endgerät (300) die verfügbare MDT-Messinformation hat;
wobei das Verfahren **dadurch gekennzeichnet ist, dass** es des Weiteren umfasst:
Empfangen (620), von der Basisstation (305), einer Anforderungsnachricht, die eine Anforderung für RLF-Informationen (Radio Link Failure - Funkverbindungsausfall) und RACH-Informationen (Random Access Channel - Direktzugriffskanal) umfasst; und
Senden (630), an die Basisstation (305), einer Antwortnachricht mit den RLF-Informationen und den RACH-Informationen entsprechend der Anforderungsnachricht,
wobei die Antwortnachricht über einen Signalisierungsfunkträger 2, SRB2, gesendet wird, wenn die Anforderungsnachricht eine Anforderung für die MDT-Messinformation enthält und die MDT-Messinformation in der Antwortnachricht dargestellt wird, und
wobei die Antwortnachricht über einen Signalisierungsfunkträger 1, SRB1, gesendet wird, wenn die Anforderungsnachricht nicht die Anforderung für die MDT-Messinformation enthält und die MDT-Messinformation nicht in der Antwortnachricht dargestellt wird.

2. Verfahren nach Anspruch 1, des Weiteren umfassend:
Löschen der MDT-Messinformation nach dem Senden der MDT-Messinformation an die Basisstation (305).

3. Informationsempfangsverfahren durch eine Basisstation (305), wobei das Verfahren umfasst:
Senden (430), an ein Endgerät (300), von MDT- (Minimization of Drive Test - Minimierung des Fahrttests) Konfigurationsinformationen in einem verbundenen Modus einer Funkressourcensteuerung (Radio Resource Control, RRC), wobei die MDT-Konfigurationsinformationen Dauerinformationen in Bezug auf die MDT enthalten;
Empfangen (475), von dem Endgerät (300), von verfügbaren MDT-Informationen über eine Funkressourcensteuerungs-, RRC-, Verbindungsaufbauvollständigkeitsnachricht, wenn das Endgerät (300) eine verfügbare MDT-Messinformation hat, die basierend auf den MDT-Konfigurationsinformationen erzeugt wurde, wobei die verfügbaren MDT-Informationen anzeigen, dass das Endgerät (300) die verfügbare MDT-Messinformation hat;
wobei das Verfahren **dadurch gekennzeichnet ist, dass** es des Weiteren umfasst:
Senden (620), an das Endgerät (300), einer Anforderungsnachricht, die eine Anforderung für RLF-Informationen (Radio Link Failure - Funkverbindungsausfall) und RACH-Informationen (Random Access Channel - Direktzugriffskanal) umfasst; und
Empfangen (630), von dem Endgerät (300), einer Antwortnachricht mit den RLF-Informationen und den RACH-Informationen entsprechend der Anforderungsnachricht,
wobei die Antwortnachricht über einen Signalisierungsfunkträger 2, SRB2, empfangen wird, wenn die Anforderungsnachricht eine Anforderung für die MDT-Messinformation enthält und die MDT-Messinformation in der Antwortnachricht dargestellt wird, und
wobei die Antwortnachricht über einen Signalisierungsfunkträger 1, SRB1, empfangen wird, wenn die Anforderungsnachricht nicht die Anforderung für die MDT-Messinformation enthält und die MDT-Messinformation nicht in der Antwortnachricht dargestellt wird.

4. Informationsübertragungsvorrichtung für ein Endgerät (300), wobei die Vorrichtung umfasst:
einen Sendeempfänger (1105) zum Senden und Empfangen eines Signals; und
eine Steuerung (1115), die zu Folgendem konfiguriert ist:
Empfangen (430), von einer Basisstation (305) von MDT- (Minimization of Drive Test - Minimierung des Fahrttests) Konfigurationsinformationen in einem verbundenen Modus einer Funkressourcensteuerung (Radio Resource Control, RRC), wobei die MDT-Konfigurationsinformationen Dauerinformationen in Bezug auf die MDT enthalten,
Senden (475), an die Basisstation (305), von verfügbaren MDT-Informationen über eine Funkressourcensteuerungs-, RRC-, Verbindungsaufbauvollständigkeitsnachricht, wenn das Endgerät (300) eine verfügbare MDT-Messinformation hat, die basierend auf den MDT-Konfigurationsinformationen erzeugt wurde, wobei die verfügbaren MDT-Informationen anzeigen, dass das Endgerät (300) die verfügbare MDT-Messinformation hat,
wobei die Vorrichtung **dadurch gekennzeichnet ist, dass** die Steuerung des Weiteren zu Folgendem konfiguriert ist:
Empfangen (620), von der Basisstation (305), einer Anforderungsnachricht, die eine Anforderung für RLF-Informationen (Radio Link Failure - Funkverbindungsausfall) und RACH-Informationen (Random Access Channel - Direktzugriffskanal) umfasst, und
Senden (630), an die Basisstation (305), einer Antwortnachricht mit den RLF-Informationen und den RACH-Informationen entsprechend der Anforderungsnachricht,
wobei die Antwortnachricht über einen Signalisierungsfunkträger 2, SRB2, gesendet wird, wenn die Anforderungsnachricht eine Anforderung für die MDT-Messinformation enthält und die MDT-Messinformation in der Antwortnachricht dargestellt wird, und
wobei die Antwortnachricht über einen Signalisierungsfunkträger 1, SRB1, gesendet wird, wenn die Anforderungsnachricht nicht die Anforderung für die MDT-Messinformation enthält und die MDT-Messinformation nicht in der Antwortnachricht dargestellt wird.

5. Vorrichtung nach Anspruch 4, wobei die Steuerung (1115) des Weiteren dazu konfiguriert ist, die MDT-Messinformation nach dem Senden der MDT-Messinformation an die Basisstation (305) zu löschen.

6. Informationsempfangsvorrichtung für eine Basisstation (305), wobei die Vorrichtung umfasst:
einen Sendeempfänger (1205) zum Senden und Empfangen eines Signals; und
eine Steuerung (1210), die zu Folgendem konfiguriert ist:
Senden (430), an ein Endgerät (300), von MDT- (Minimization of Drive Test - Minimierung des Fahrttests) Konfigurationsinformationen in einem verbundenen Modus einer Funkressourcensteuerung (Radio Resource Control, RRC), wobei die MDT-Konfigurationsinformationen Dauerinformationen in Bezug auf die MDT enthalten,
Empfangen (475), von dem Endgerät (300), von verfügbaren MDT-Informationen über eine Funkressourcensteuerungs-, RRC-, Verbindungsaufbauvollständigkeitsnachricht, wenn das Endgerät (300) eine verfügbare MDT-Messinformation hat, die basierend auf den MDT-Konfigurationsinformationen erzeugt wurde, wobei die verfügbaren MDT-Informationen anzeigen, dass das Endgerät (300) die verfügbare MDT-Messinformation hat,
wobei die Vorrichtung **dadurch gekennzeichnet ist, dass** die Steuerung des Weiteren zu Folgendem konfiguriert ist:
Senden (620), an das Endgerät (300), einer Anforderungsnachricht, die eine Anforderung für RLF-Informationen (Radio Link Failure - Funkverbindungsausfall) und RACH-Informationen (Random Access Channel - Direktzugriffskanal) umfasst, und
Empfangen (630), von dem Endgerät (300), einer Antwortnachricht mit den RLF-Informationen und den RACH-Informationen entsprechend der Anforderungsnachricht,
wobei die Antwortnachricht über einen Signalisierungsfunkträger 2, SRB2, empfangen wird, wenn die Anforderungsnachricht eine Anforderung für die MDT-Messinformation enthält und die MDT-Messinformation in der Antwortnachricht dargestellt wird, und
wobei die Antwortnachricht über einen Signalisierungsfunkträger 1, SRB1, empfangen wird, wenn die Anforderungsnachricht nicht die Anforderung für die MDT-Messinformation enthält und die MDT-Messinformation nicht in der Antwortnachricht dargestellt wird.

## Revendications

1. Procédé de transmission d'informations par un terminal (300), Ir procédé comprenant les opérations suivantes:
recevoir (430), à partir d'une station de base (305), des informations de configuration de minimisation du test de conduite, MDT, dans la commande des ressources radio, RRC, mode connecté, les informations de configuration du MDT y compris les informations de durée liées au MDT ;
transmettre (475), à la station de base (305), des informations disponibles de MDT via un message de commande de ressources radio, RRC, d'établissement de connexion complète, si le terminal (300) a une information de mesure de MDT disponible générée sur la base des informations de configuration de MDT, les informations disponibles de MDT indiquant que le terminal (300) a l'information de mesure de MDT disponible, le procédé étant **caractérisé en ce qu'**il comprend en outre
recevoir (620), à partir de la station de base (305), un message de demande comprenant une demande d'informations de défaillance de la liaison radio, RLF et d'informations de canal d'accès aléatoire, RACH,
transmettre (630), à la station de base (305), un message de réponse comprenant les informations RLF et les informations RACH selon le message de demande,
dans lequel le message de réponse est transmis via un support radio de signalisation 2, SRB2, si le message de demande comprend une demande d'informations sur les mesures de la MDT et que les informations sur les mesures de la MDT sont présentées dans le message de réponse, et
dans lequel le message de réponse est transmis via un support radio de signalisation 1, SRB1, si le message de demande n'inclut pas la demande d'informations de mesure de MDT et que les informations de mesure de MDT ne sont pas présentées dans le message de réponse.

2. Procédé selon la revendication 1, comprenant en outre:
la suppression des informations de mesure de la MDT après la transmission des informations de mesure de la MDT à la station de base (305).

3. Procédé de réception d'informations par une station de base (305), le procédé comprenant les opérations suivantes:
transmettre (430), vers un terminal (300), des informations de configuration de minimisation de l'essai de conduite, MDT, en mode connecté de la commande des ressources radio, RRC, les informations de configuration du MDT comprenant les informations de durée liées aux informations MDT;
recevoir (475), à partir du terminal (300), d'es nformations disponibles de MDT via un message de commande de ressources radio, RRC, de configuration de connexion complète, si le terminal (300) a une information de mesure de MDT disponible générée sur la base de l'information de configuration de MDT, les informations disponibles de MDT indiquant que le terminal (300) comporte les l'informations de mesure de MDT disponibles, le procédé étant **caractérisé en ce qu'**il comprend en outre les opérations suivantes:
transmettre (620), au terminal (300), un message de demande comprenant des informations de demande de défaillance de la liaison radio, RLF, et des informations de canal d'accès aléatoire, RACH,
recevoir (630), depuis le terminal (300), un message de réponse comprenant les informations RLF et les informations RACH selon le message de demande,
dans lequel le message de réponse est reçu via un support radio de signalisation 2, SRB2, si le message de demande comprend une demande d'informations sur les mesures de la MDT et que les informations sur les mesures de la MDT sont présentées dans le message de réponse, et
dans lequel le message de réponse est reçu via un support radio de signalisation 1, SRB1, si le message de demande ne comprend pas la demande d'informations de mesure de la MDT et si les informations de mesure de la MDT ne sont pas présentées dans le message de réponse.

4. Appareil de transmission d'informations d'un terminal (300), l'appareil comprenant:
un émetteur-récepteur (1105) pour transmettre et recevoir un signal
un dispositif de commande (1115) configuré pour:
recevoir (430), à partir d'une station de base (305), les informations de configuration de minimisation de l'essai de conduite, MDT, en mode connecté de commande des ressources radio, RRC, les informations de configuration MDT comprenant les informations de durée liées aux informations MDT,
transmettre (475), à la station de base (305), des informations disponibles de MDT via un message de commande de ressources radio, RRC, de configuration de connexion complète, si le terminal (300) possède des informations de mesure de MDT disponible générée sur la base des informations de configuration de MDT, les informations disponibles de MDT indiquant que le terminal (300) possède les informations de mesure de MDT disponibles, l'appareil étant **caractérisé par le fait que** le dispositif de commande est en outre configuré pour
recevoir (620), de la station de base (305), un message de demande comprenant des informations de demande de défaillance de la liaison radio, RLF et des informations de canal d'accès aléatoire, RACH,
transmettre (630), à la station de base (305), un message de réponse comprenant les informations RLF et les informations RACH selon le message de demande,
dans lequel le message de réponse est transmis via un support radio de signalisation 2, SRB2, si le message de demande comprend une demande d'informations sur les mesures de la MDT et que les informations sur les mesures de la MDT sont présentées dans le message de réponse, et
dans lequel le message de réponse est transmis via un support radio de signalisation 1, SRB1, si le message de demande n'inclut pas la demande d'informations de mesure de MDT et que les informations de mesure de MDT ne sont pas présentées dans le message de réponse.

5. Appareil selon la revendication 4, dans lequel le dispositif de commande (1115) est en outre configuré pour supprimer les informations de mesure de la MDT après avoir transmis les informations de mesure de la MDT à la station de base (305).

6. Appareil de réception d'informations d'une station de base (305), l'appareil comprenant:
un émetteur-récepteur (1205) pour transmettre et recevoir un signal
un dispositif de commande (1210) configuré pour:
transmettre (430), à un terminal (300), des informations de configuration de minimisation de l'essai de conduite, MDT, en mode connecté de commande des ressources radio, RRC, les informations de configuration du MDT comportant les informations de durée liées au MDT,
recevoir (475), à partir du terminal (300), des informations de MDT disponibles via un message de commande de ressources radio, RRC, de configuration de connexion complète, si le terminal (300) possède des informations de mesure de MDT disponible générée sur la base des informations de configuration de MDT, les informations de MDT disponibles indiquant que le terminal (300) comporte les informations de mesure de MDT disponible, l'appareil étant **caractérisé par le fait que** la commandeur est en outre configuré pour
transmettre (620), au terminal (300), un message de demande comprenant des informations de demande de défaillance de la liaison radio, RLF et des informations de canal d'accès aléatoire, RACH, et
recevoir (630), à partir du terminal (300), un message de réponse comprenant les informations RLF et les informations RACH selon le message de demande,
dans lequel le message de réponse est reçu via un support radio de signalisation 2, SRB2, si le message de demande comprend une demande d'informations sur les mesures de la MDT et que les informations sur les mesures de la MDT sont présentées dans le message de réponse, et
dans lequel le message de réponse est reçu via un support radio de signalisation 1, SRB1, si le message de demande ne comprend pas la demande d'informations de mesure de la MDT et si les informations de mesure de la MDT ne sont pas présentées dans le message de réponse.
